# EUROPÄISCHE PATENTANMELDUNG

(11) **EP 2 505 461 A2**
(43) Veröffentlichungstag der Anmeldung: **03.10.2012**
(21) Anmeldenummer: 12159473.3
(22) Anmeldetag: 14.03.2012
(51) Int. Cl.: B62D 33/02, B62D 25/20

(54) **Montagesystem, Transportboden und Spannelement**

(30) Priorität: 28.03.2011 DE 102011001589
(71) Anmelder: Novo-Tech GmbH & Co. KG, 06449 Aschersleben (DE)
(72) Erfinder:
(74) Vertreter: Dantz, Jan Henning

(57) **Zusammenfassung**

Ein Montagesystem für einen Boden- oder Wandbelag umfasst eine extrudierte Platte (1), in der mindestens eine Hohlkammer (4) ausgebildet ist, und ein Spannelement (10) zur Verbindung der Platte (1) mit einem weiteren Bauteil, wobei das Spannelement (10) durch eine Montageöffnung (8) an der Platte (1) mit einem Halteabschnitt (11) in die Hohlkammer (4) eingreift, wobei dem Halterabschnitt (11) ein Formkörper (12) angeordnet ist, der mit einer Anlagefläche (14) zumindest bereichsweise formschlüssig an einer Innenwand der Hohlkammer (4) anliegt. Dies ermöglicht eine einfache Handhabung.

## Beschreibung

Die vorliegende Erfindung betrifft ein Montagesystem für einen Boden- oder Wandbelag, mit einer extrudierten Platte, in der mindestens eine Hohlkammer ausgebildet ist, und ein Spannelement zur Verbindung der Platte mit einem weiteren Bauteil, wobei das Spannelement durch eine Montageöffnung an der Platte mit einem Halteabschnitt in die Hohlkammer eingreift, sowie einen Transportbodan und ein Spannelement für ein Montagesystem.

Die EP 2184145 offenbart einen Transportboden mit einer Vielzahl von Paneelen, die durch Extrusion hergestellt sind und aus einer Mischung aus lignocellulosehaltigen Fasern und Kunststoff bestehen. Die Paneele weisen randseitig an ihren Längskanten eine Profilierung zur Montage auf, wobei die Paneele über Leisten festgelegt werden, die von oben durch Spannelemente mit durchgriffen sind. Dadurch kann eine Montage an einer Unterkonstruktion erfolgen. Bei dem System ist nachteilig, dass die Spannelemente, die meist aus Metall bestehen, an der Oberseite sichtbar angeordnet sind. Selbst wenn die Spannelemente versenkt werden, bilden sich Spalte aus, die die Unterseite des Ladeguts beschädigen können oder ein Eindringen von Feuchtigkeit ermöglichen. Zudem erfolgt die Fixierung der Paneelen seitlich in vorbestimmten Abständen, was Probleme bereiten kann, wenn die Unterkonstruktion an einer anderen Stelle Befestigungsmittel erfordert.

Es ist daher Aufgabe der vorliegenden Erfindung ein einfach zu montierendes Montagesystem zu schaffen, dass die oben genannten Nachteile beseitigt und eine effektive Befestigung von extrudierten Platten ermöglicht.

Diese Aufgabe wird mit einem Montagesystem mit den Merkmalen des Anspruches 1 gelöst ist.

Erfindungsgemäß ist an einem Halteabschnitt des Spannelementes ein Formkörper angeordnet, der mit einer Anlagefläche zumindest bereichsweise formschlüssig an einer Innenwand der Hohlkammer anliegt. Dadurch kann die extrudierte Platte im Bereich der Hohlkammer durch den Formkörper fixiert werden, sodass die Montagemittel weitgehend in der Platte verdeckt liegend angeordnet sind. Dadurch bleibt die Oberfläche der Platte frei von Befestigungsmitteln oder Spalten für die Befestigungsmittel.

Vorzugsweise ist die Anlagefläche an die Kontur der Hohlkammer angepasst. Dadurch können besonders hohe Haltekräfte aufgenommen werden. Die Anlagefläche steht dabei in einer vorteilhaften Ausgestaltung zu beiden Seiten der Montageöffnung hervor, sodass Haltekräfte an unterschiedlichen Stellen der Hohlkammer aufgenommen werden können. Die Hohlkammer kann dabei einen kreisförmigen oder ovalen Querschnitt besitzen, sodass bei einer formschlüssigen Anlage Haltekräfte in unterschiedlichen Richtungen vorhanden sind.

Der Formkörper ist vorzugsweise schwenkbar an dem Halteabschnitt gelagert. Der Schwenkbereich kann dabei durch Anschläge begrenzt sein, sodass dieser in einem Bereich von weniger als 180 ° vorzugsweise weniger als 120 ° liegt. In einer vorteilhaften Ausgestaltung liegt der Schwenkbereich etwa bei 90 °, sodass der Formkörper auf einfache Weise durch eine Montageöffnung in die Hohlkammer eingeführt werden kann und um etwa 90 ° verschwenkt wird.

Um das Spannelement an unterschiedlichen Positionen an der Platte montieren zu können, weist die Platte vorzugsweise eine Vielzahl in regelmäßigen Abständen angeordnete Hohlkammern gleicher Geometrie auf. Dadurch wird einerseits Material eingespart und andererseits ergibt sich eine hohe Flexibilität bei der Montage der Platten. Die Platten bestehen dabei vorzugsweise aus einer Mischung aus Naturfasern und einem Polymerwerkstoff, wobei einzelne Naturfasern insbesondere lignocellulosehaltige Fasern, wie Holzspäne, Gräser, Reisschalen oder andere nachwachsende Rohstoffe eingesetzt werden. Diese Naturfasern können in einem Anteil von über 70 % mit einem Polymerwerkstoff, insbesondere Polypropylen und/oder Polypropylen gemischt und extrudiert werden.

Für eine besonders stabile Befestigung des Spannelementes erstreckt sich der Formkörper vorzugsweise um über mehr als 80 %, insbesondere als 90 % der Breite der Kammer. Dadurch erstreckt sich der Formkörper auch bis nahe an die Stege zwischen zwei benachbarten Hohlkammern, sodass hohe Haltekräfte für eine stabile Befestigung sorgen.

Vorzugsweise umfasst das Spannelement an dem Halteabschnitt einen Bolzen, der an dem von der Platte hervorstehenden Bereich ein Gewindeabschnitt aufweist. Dadurch kann der aus der Montageöffnung hervorstehende Bolzen auf einfache Weise auf einen anderen Bauteil, beispielsweise einem Gestell montiert werden.

Erfindungsgemäß wird auch ein Transportboden für Fahrzeuge, beispielsweise LKW oder Schiffe bereitgestellt, bei dem eine extrudierte Platte über ein erfindungsgemäßes Montagesystem an einer Unterkonstruktion festgelegt ist. Dabei können die Spannelemente an einer Unterseite der Platte angeordnet sein, sodass eine im Wesentlichen ebene Oberfläche ohne hervorstehende Montagemittel bereit gestellt wird. Dadurch weisen die Platten eine hohe Witterungsbeständigkeit auf und sind auch für den Außeneinsatz verwendbar. Ferner wird erfindungsgemäß ein Spannelement für ein erfindungsgemäßes Montagesystem bereitgestellt. Solche Spannelemente lassen sich auf einfacher Weise an der gewünschten Hohlkammer einer Platte montieren.

Die Erfindung wird nachfolgend anhand eines Ausführungsbeispieles mit Bezug auf die beigefügten Zeichnungen näher erläutert. Es zeigen:
- Figur 1:: eine Seitenansicht eines erfindungsgemäßen Montagesystems mit einer Platte und einem Spannelement vor der Montage;
- Figur 2 bis 4:: mehrere Ansichten des Montagesystems der Figur 1 bei der Montage;

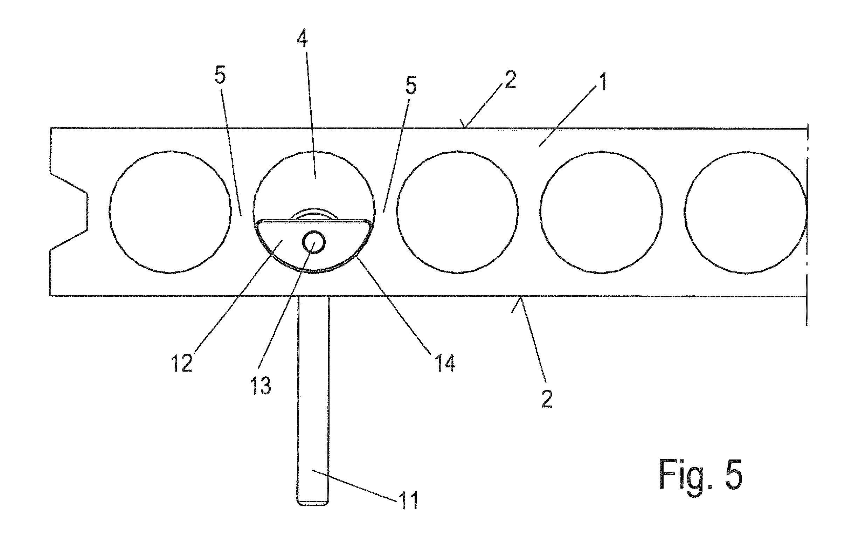

- Figur 5:: eine Seitenansicht des Montagesystems nach erfolgter Montage eines Spannmittels, und
- Figur 6 A bis 6 C: mehrere Ansichten des Spannelementes des Montagesystems der Figur 1.

Eine Platte 1 besteht aus einer Mischung aus Naturfasern, insbesondere lignocellulosehaltigen Fasern, wie z. B. Holzspäne, Reisschalen oder anderen nachwachsenden Rohstoffe und einem Polymerwerkstoff. Die durch Extrusion hergestellte Platte 1 umfasst eine im Wesentlichen ebene Oberfläche 2, eine im Wesentlichen ebene Unterseite 3 und eine Vielzahl von Hohlkammer 4, die in den dargestellten Ausführungsbeispielen einen kreisförmigen Querschnitt besitzen, aber auch andere Geometrien besitzen können. Die einzelnen Hohlkammern 4 sind über Stege 5 von einander getrennt. Jede Platte 1 umfasst an einer Längskante eine Nut 6 und auf der gegenüber liegenden Seite eine Feder 7, sodass mehrere Platten 1 ineinander gesteckt werden können.

Zur Montage der Platte 1 ist ein Spannelement 10 vorgesehen, das einen Bolzen 11 aufweist, der an einem endseitigen Kopfabsnitt einen schwenkbar gelagerten Formkörper 12 aufweist. Der Formkörper 12 ist dabei um eine Achse 13 drehbar gehalten, wobei der Schwenkbereich durch Anschläge begrenzt ist. Der Formkörper 12 besitzt eine gerundete Anlagefläche 14, die an die Kontur der kreisförmigen Hohlkammern 4 angepasst ist.

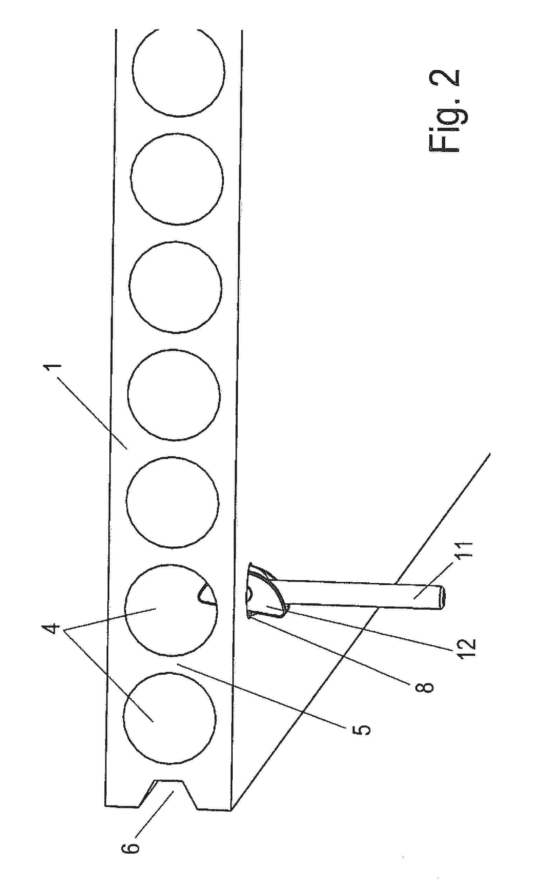

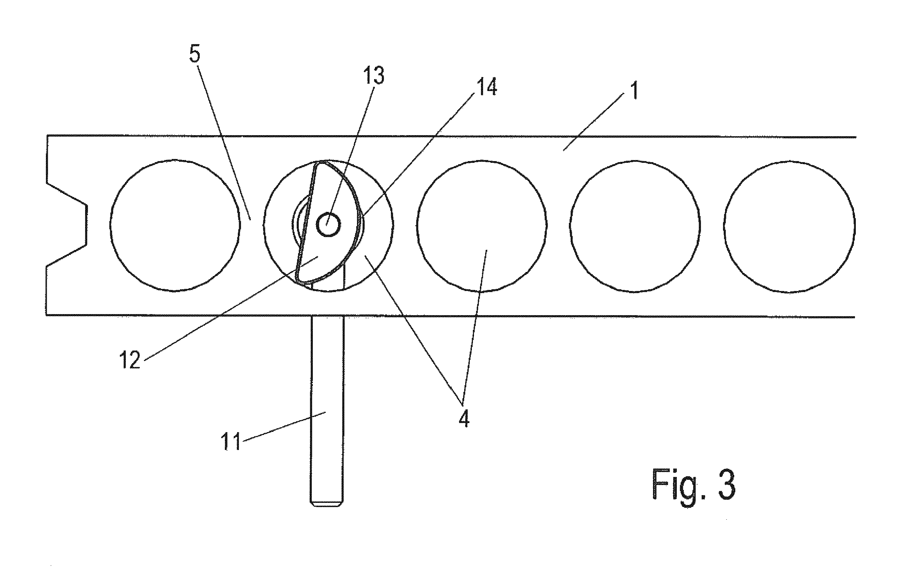

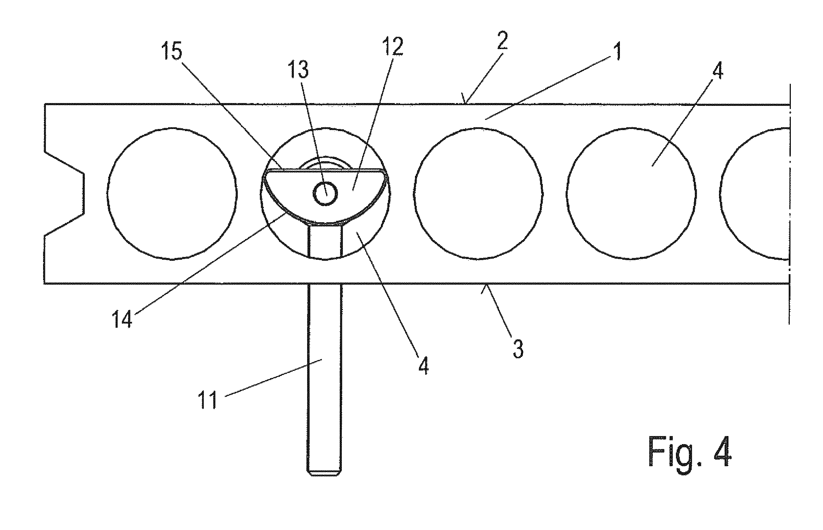

Für die Montage des Spannelementes 10 wird der Formkörper 12 durch eine Montageöffnung 8 an einer Unterseite 3 der Platte 1 eingesteckt, wie dies in Figur 2 gezeigt ist. Nachdem der Formkörper 12 vollständig in der Hohlkammer 4 angeordnet ist (Figur 3), kann der Formkörper 12 um etwa 90 ° verschwenk werden, bis die in Figur 4 gezeigte Position erreicht ist. Anschließend wird der Formkörper 12 zur Unterseite 3 hingezogen, bis die gerundete Anlagefläche 14 im Wesentlichen formschlüssig an der Innenwand der Hohlkammer 4 anliegt. Dabei erstreckt sich der Formkörper 12 über einen Großteil der Breite der Hohlkammer 4 zwischen zwei Stegen 5, sodass hohe Haltekräfte in unterschiedliche Richtungen aufgenommen werden können. An dem Bolzen 11 ist an dem von der Platte 1 hervor stehenden Bereich ein Gewindeabschnitt ausgebildet, an dem nun ein weiteres Bauteil festgelegt werden kann, beispielsweise um die Platte 1 an einer Unterkonstruktion eines Transportbodens festzulegen.

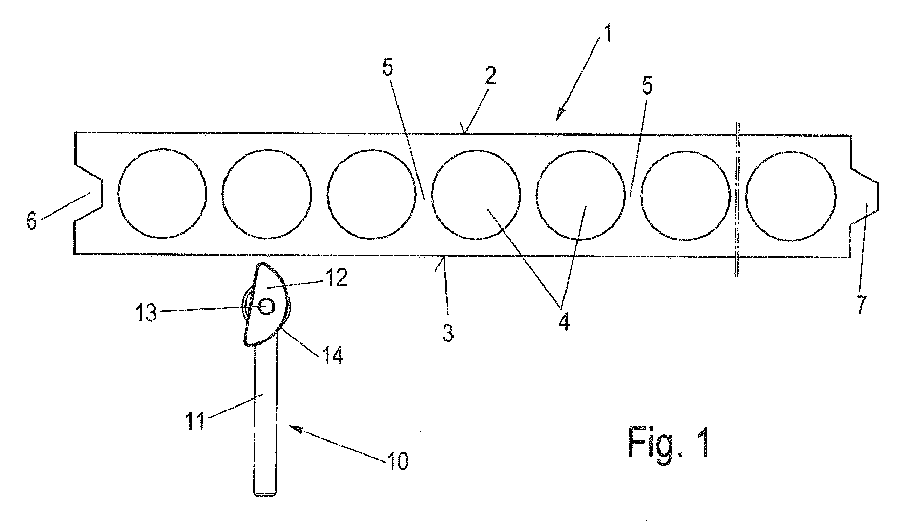

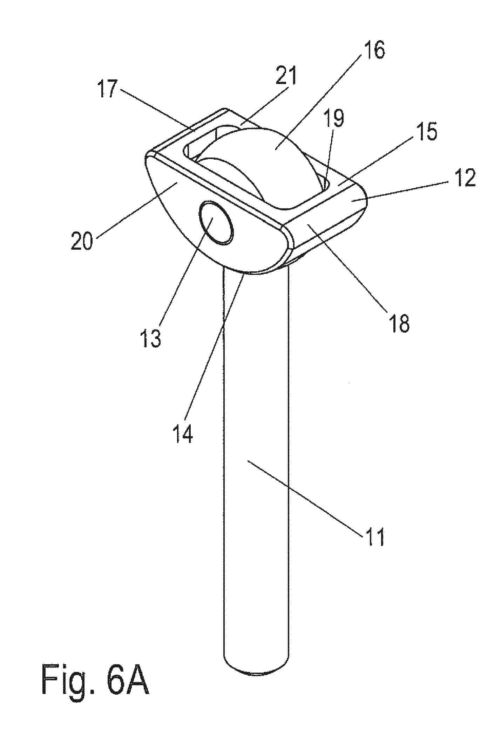

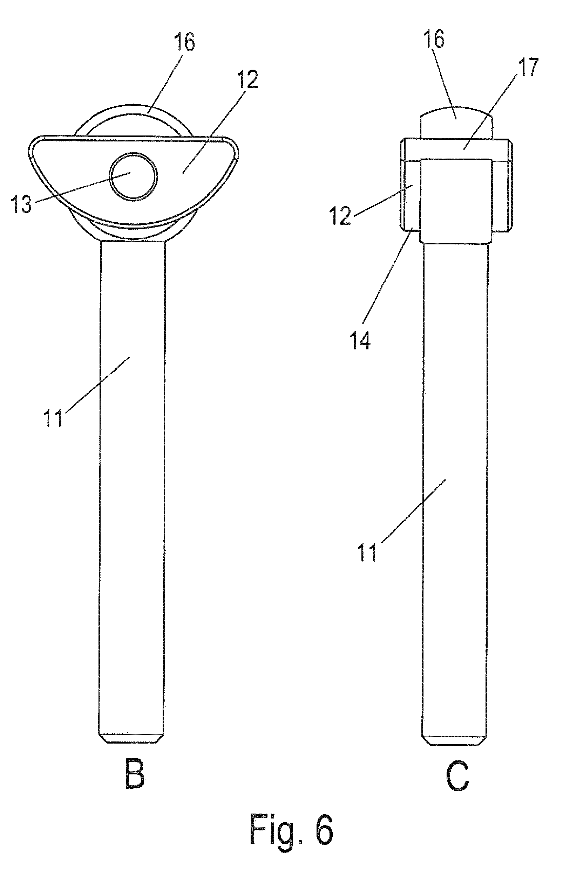

Zur Festlegung einer Platte 1 kann jede Hohlkammer 4 eingesetzt werden, wobei die Hohlkammern 4 in regelmäßigen Abständen angeordnet sind und den gleichen Querschnitt aufweisen. Dadurch kann bei der Montage an unterschiedlichen Positionen ein entsprechendes Spannelement 10 festgelegt werden. Die Anzahl der Spannelemente 10 kann für den jeweiligen Einsatzzweck angepasst werden. Es muss lediglich im Bereich der Hohlkammer 4 eine Montageöffnung 8 an der Unterseite 3 eingebracht werden, durch die das Spannelement 10 montiert wird. Der Formkörper 12 weist dabei eine ebene Rückseite 15 auf, sodass eine Fehlmontage vermieden wird. Denn sobald die gerundete Anlagefläche 14 an der unteren Wand der Hohlkammer 4 anliegt, erfolgt automatisch eine Ausrichtung des Formkörpers 12 durch Spannen des Bolzens 11. In den Figuren 6 A bis 6 C ist das Spannelement 10 gezeigt. Der Bolzen 11 umfasst an einem Ende einen verdickten Kopfabschnitt 16, der in einer Aussparung des Formkörpers 12 angeordnet ist. Durch den Kopfabschnitt 16 ist eine Achse 13 durchgeführt, die den Formkörper 12 an einem Kopfabschnitt 16 drehbar lagert. Dabei umfasst der Formkörper 12 zwei Seitenwände 20 und 21, zwischen denen an der Anlagefläche 14 eine Aussparung gebildet ist, durch die der Bolzen 11 durchgeführt ist. Die Seitenwände 20 und 21 sind im oberen Bereich über Stege 17 und 18 miteinander verbunden. Verschwenkt der Formkörper 12 relativ zu dem Bolzen 11, bilden die Stege 17 und 18 Anschlagsflächen aus, sodass der Formkörper 12 aus der gezeigten Position um etwas weniger als 180 ° verschwenken kann. Dadurch kann das Spannelement 10 zum Einführen die Montageöffnung 8 an der Platte 1 eine schlanke Form einnehmen, wie dies in Figur 1 gezeigt ist. Nachdem der Formkörper 12 in die Hohlkammer 4 eingeführt ist, kann dann der Formkörper 12 um die Achse 13 verschwenken. In dem gezeigten Ausführungsbeispiel werden im Querschnitt kreisförmige Hohlkammern 4 an der Platte 1 vorgesehen, die mit einer entsprechend ausgebildeten Ablagefläche 14 des Formkörpers 12 in Eingriff stehen. Es ist auch möglich, die Hohlkammer 4 oval oder anders geformt auszubilden, wobei die Anlagefläche 14 vorzugsweise an die Kontur der Innenwand der Hohlkammern 4 angepasst ist.

Das Spannelement 10 besteht vorzugsweise aus Metall, um die Platte 1 stabil an dem Untergrund zu befestigen. Solche Befestigungen können insbesondere für einen Transportboden eingesetzt werden, bei dem die Platte 1 einen ebenen Untergrund ausbilden soll und an einer Unterkonstruktion befestigt wird.

### Bezugszeichen

- 1: Platte
- 2: Oberfläche
- 3: Unterseite
- 4: Hohlkammer
- 5: Stege
- 6: Nut
- 7: Feder
- 8: Montageöffnung
- 10: Spannelement
- 11: Halteabschnitt
- 11: Bolzen
- 12: Formkörper
- 13: Achse
- 14: Anlagefläche
- 15: Rückseite
- 16: Kopfabschnitt
- 17: Anschlag/Steg
- 18: Anschlag/Steg
- 20: Seitenwand
- 21: Seitenwand

## Patentansprüche

1. Montagesystem für einen Boden- oder Wandbelag mit einer extrudierten Platte (1), in der mindestens eine Hohlkammer (4) ausgebildet ist, und einem Spannelement (10) zur Verbindung der Platte (1) mit einem weiteren Bauteil, wobei das Spannelement (10) durch eine Montageöffnung (8) an der Platte 1 mit einem Halteabschnitt (11) in die Hohlkammer (4) eingreift, **dadurch gekennzeichnet, dass** an dem Halterabschnitt (11) ein Formkörper (12) angeordnet ist, der mit einer Anlagefläche (14) zumindest bereichsweise formschlüssig an einer Innenwand der Hohlkammer (4) anliegt.

2. Montagesystem nach Anspruch 1, **dadurch gekennzeichnet, dass** die Anlagefläche (14) an die Kontur der Hohlkammer (4) angepasst ist.

3. Montagesystem nach Anspruch 1 oder 2, **dadurch gekennzeichnet, dass** die Anlagefläche (14) zu beiden Seiten der Montageöffnung (8) hervorsteht.

4. Montagesystem nach einem der vorhergehenden Ansprüche, **dadurch gekennzeichnet, dass** der Formkörper (12) schwenkbar an dem Halteabschnitt (11) gelagert ist.

5. Montagesystem nach einem der vorhergehenden Ansprüche, **dadurch gekennzeichnet, dass** der Schwenkbereich des Formkörpers (12) relativ zu dem Halteabschnitt (11) durch Anschläge (17, 18) auf weniger als 180 °, vorzugsweise weniger 120 °, begrenzt ist.

6. Montagesystem nach einem der vorhergehenden Ansprüche, **dadurch gekennzeichnet, dass** die mindestens eine Hohlkammer (4) einen kreisförmigen oder ovalen Querschnitt besitzt.

7. Montagesystem nach einem der vorhergehenden Ansprüche, **dadurch gekennzeichnet, dass** die Platte (1) eine Vielzahl in regelmäßigen Abständen angeordnete Hohlkammern (4) gleicher Geometrie aufweist.

8. Montagesystem nach einem der vorhergehenden Ansprüche, **dadurch gekennzeichnet, dass** der Formkörper (12) sich um mehr als 80 %, vorzugweise mehr als 90 % der Breite der Hohlkammern (4) erstreckt.

9. Montagesystem nach einem der vorhergehenden Ansprüche, **dadurch gekennzeichnet, dass** die Platte (1) aus einer Mischung aus Naturfasern und einem Polymerwerkstoff hergestellt ist.

10. Montagesystem nach einem der vorhergehenden Ansprüche, **dadurch gekennzeichnet, dass** das Spannelement (10) einen Bolzen aufweist, der an dem von der Platte (1) hervorstehenden Bereich ein Gewindeabschnitt aufweist.

11. Transportboden für Fahrzeuge oder Schiffe, **dadurch gekennzeichnet, dass** bei dem Transportboden mindestens eine Platte (1) über ein Montagesystem nach einem der vorhergehenden Ansprüche an einer Unterkonstruktion festgelegt ist.

12. Transportboden nach Anspruch 11, **dadurch gekennzeichnet, dass** die Spannelemente (10) an einer Unterseite (3) der Platte (1) angeordnet sind und eine im wesentlichen ebene Oberfläche (2) ohne hervorstehende Montagemittel bereit gestellt wird.

13. Spannelement (10) für ein Montagesystem nach einem der Ansprüche 1 bis 10, **gekennzeichnet durch** einen Bolzen (11), an dem ein Formkörper (12) schwenkbar gelagert ist, wobei der Formkörper (12) eine auf die Kontur einer im Innenrand einer Hohlkammer (4) angepassten Anlagefläche (14) aufweist.

14. Spannelemente nach Anspruch 13, **dadurch gekennzeichnet, dass** der Schwenkbereich des Formkörpers (12) relativ zu dem Bolzen (11) über Anschläge (17, 18) begrenzt ist.
